# EUROPÄISCHE PATENTSCHRIFT

(11) **EP 0 988 470 B1**
(45) Veröffentlichungstag und Bekanntmachung des Hinweises auf die Patenterteilung: **06.03.2002**
(21) Anmeldenummer: 98940075.9
(22) Anmeldetag: 17.06.1998
(51) Int. Cl.: F16F 15/14, B60K 17/22

(54) **HOHLE ANTRIEBSWELLE MIT INTEGRIERTEM SCHWINGUNGSTILGER**
HOLLOW DRIVE SHAFT WITH INTEGRATED VIBRATION ABSORBER
ARBRE MOTEUR CREUX AVEC AMORTISSEUR DE VIBRATIONS INTEGRE

(30) Priorität: 20.06.1997 DE 19726293
(43) Veröffentlichungstag der Anmeldung: 29.03.2000
(73) Patentinhaber: ContiTech Vibration Control GmbH, 30422 Hannover (DE); Volkswagen Aktiengesellschaft, 38436 Wolfsburg (DE)
(72) Erfinder: GASSEN, Achim, D-50825 Köln (DE); BEBERMEIER, Jürgen, D-30823 Garbsen (DE); SELLSCHOPP, Jürgen, D-38122 Braunschweig (DE); MARETZKE, Jürgen, D-38550 Isenbüttel (DE)
(74) Vertreter: Schneider, Egon
(86) Internationale Anmeldenummer: EP9803635
(87) Internationale Veröffentlichungsnummer: WO9859185

(56) Entgegenhaltungen:
- US-A- 4 207 957
- US-A- 5 326 324
- PATENT ABSTRACTS OF JAPAN vol. 097, no. 001, 31. Januar 1997 -& JP 08 233031 A (UNISIA JECS CORP), 10. September 1996

## Beschreibung

Die Erfindung betrifft eine hohle Antriebswelle mit integriertem Schwingungstilger - insbesondere für ein Kraftfahrzeug -, gemäß dem Oberbegriff des Patentanspruchs 1.

Bei einem Kraftfahrzeug ist ein Drehmoment von einem Antriebsmotor (insbesondere Verbrennungskraftmaschine) über ein Schwungrad, eine Kupplung, ein Getriebe, ein Differential (Wechselgetriebe) an ein Antriebsrad zu übertragen.

Sind zwei der genannten Bauelemente räumlich voneinander entfernt angeordnet, so sind sie zwecks des von einem zum anderen Bauelement zu übertragenden Drehmoments durch eine Antriebswelle miteinander zu verbinden.
Derartige Antriebswellen neigen zu unerwünschten Schwingungen und Vibrationen.

In der "Automobiltechnischen Zeitschrift" vom 6.6.76, S. 259ff. wird eine Antriebswelle beschrieben, die von einem als Hilfsträger dienenden Rohr umgeben ist. Dabei ist ein zwischen Welle und Rohr angeordnetes Lager mit einem Gummiring versehen, der zur Vibrationsisolation dienen soll. Diese Art Schwingungsdämpfung hat sich als völlig unzureichend herausgestellt <siehe z. B.: DE-27 47 225, Sp. 1, Z. 38 - 51).

Die DE-11 78 303 i.V.m. DE-11 13 367 beschreibt eine als Metallstange ausgebildete Antriebswelle, die an bestimmten Stellen von Schwingungsdämpfern umgeben ist.

Das Problem bei derartigen massiven Antriebswellen mit Außendämpfern besteht darin, daß diese Außendämpfer einen relativ großen Radius aufweisen. Auch sind diese Schwingungstilgermassen gegen Fremdeinwirkungen, wie z. B. Schmutz und Beschädigungen, nicht geschützt, da sie außen an der massiven Antriebsachse angeordnet sind.

Außer Schwingungsdämpfer für Vollwellen, bei denen der Schwingungsdämpfer außen an der aus Vollmaterial ausgebildeten Antriebswelle angeordnet ist, sind auch Schwingungsdämpfer bekannt, die innerhalb eines hohlen, die massive Antriebswelle umhüllenden drehfesten (Trag-)Rohres angeordnet sind.

Die DE-17 55 860 befaßt sich mit der Schwingungstilgung einer Antriebswelle, bei der die Schwingungstilger in Form von rohrförmigen massebehafteten Gummifedern ausgebildet sind, die sich zwischen Antriebswelle und gegebenenfalls einem als Schutz dienenden Hüllrohr befinden. Hierbei soll das fakultativ vorgesehene Hüllrohr gegebenenfalls als zusätzliche "Schwingungstilgermasse" dienen. Da dieses Hüllrohr mehr oder weniger starr mit dem Motorblock und evtl. auch noch mit sonstigen Fahrzeugteilen verbunden ist, ergibt sich eine äußerst unzulängliche Verminderung der vom Motor ausgehenden Schwingungen.
Eine einwandfreie Entkopplung von "Schwingungetilgermaese" und sonstigen Massen ist durch diese Art Aufbau nicht möglich.

Eine völlige Trennung von massiver Antriebswelle und Hüllrohr ist bei dem in der DE 27 47 225 beschriebenen Anordnung gegeben. Hier ist aber lediglich am Hüllrohr eine Schwingungstilgermasse angebracht. Es ist jedoch die Antriebsachse selbst, die bevorzugt zu unerwünschten Schwingungen neigt. Für diese Antriebsachse sind aber keinerlei Dämpfungsmaßnahmen vorgesehen, so daß eine solche schwingende Achse ihre Schwingungen über die kraftschlüssig an die Antriebsachse angegliederten Bauelemente <Motor, Getriebe usw.) mehr oder weniger ungehindert an das Fahrzeug übertragen kann.

Auch sind Hohlwellen bekannt. In Anbetracht der aus dem geschilderten Stand der Technik zu entnehmenden Lehren würde der Fachmann eine erforderliche Dämpfung an der Außenseite der Hohlwelle anordnen. Dabei würde er mit den von massiven Antriebswellen her bekannten Mißständen konfrontiert.

Es sind aber auch Schwingungsdämpfer für Hohlwellen vorgeschlagen worden, bei denen der Schwingungsdämpfer innerhalb einer Hohlwelle angeordnet ist.
Ausgehend von einer einfachen Ausführungsform, bestehend aus Abstimmmasse und elastischer Schicht, beschreibt die DE-OS 36 32 418 einen Schwingungstilger, bei dem eine Abstimmmasse über einen elastischen Mantel sowohl mit der Innenwand einer Antriebswelle als auch über eine weitere elastische Schicht mit einer Tilgermasse verbunden ist. Abgesehn davon, daß diese Tilgeranordnung bezüglich eines Querschnitts asymmetrisch ausgebildet ist, weist sie eine beträchtliche Baulänge in axialer Richtung auf. Aus diesen Gründen läßt sich diese Art Schwingungstilger nicht gezielt am Schwingungsbauch einer zu Vibrationen neigenden Rohrwelle anbringen. Auch die weitere Ausführungsform, wonach ein verformbarer Körper in der Hohlwelle einspannbar ist, weist ebenfalls eine beträchtliche axiale Länge auf.
Dabei ergeben sich dieselben, bereits genannten Nachteile.

In dem Dokument JP-A-8 23 30 31 wird ein Schwingungsdämpfer beschrieben, der in einer hohlen Antriebswelle untergebracht ist. Der Dämpfer-Grundkörper besteht aus einem Stützring, dessen beide Enden mittels Tragglieder an der Innenseite der hohlen Antriebswelle abgeatützt werden. Der innerhalb des Stützringes befindliche Schwingungsdämpfer besteht aus einer Dämpfermasse und einem elastischen Koppelelement, wobei die Dämpferaasse rotationssymmetrisch und axialsymmetrisch ausgebildet ist und über das elastische Koppelelement mit der Innenwand der hohlen Antriebswelle in Wirkverbindung steht.
Bei dieser Antriebswelle mit integriertem Schwingungsdämpfer besteht das Problem, dass das Koppelelement den gesamten zur Hohlwelle koaxialen Außenmantel der Dämpfermasse kontaktiert, was das Dämpfungsverhalten negativ beeinflusst.

Der Brfindung liegt die Aufgabe zugrunde, an einer als Hohlachse ausgebildeten Antrlebswelle mit einfachen Mitteln - bei Meidung der bekannten Nachteile - eine wirksame Verminderung von Schwingungsüberhöhungen bei Biegeresonanzen zu erzielen.

Bei einer gattungsgemäßen Anordnung wird diese Aufgabe dadurch gelöst, daß die innerhalb der Hohlwelle befindliche Tilgermasse rotationssymmetrisch ausgebildet ist und mittig eine Einschnürung zur Aufnahme des elastischen Koppelelements aufweist.
Vorteilhafte Weiterbildungen ergeben sich aus den Unteransprüchen.

Das Herzstück der Erfindung ist ein Schwingungstilger, der direkt in der hohlen Antriebswelle angeordnet ist, und somit Schwingungen platzparend direkt an der Antriebswelle vermindert.

Durch die Anordnung innerhalb der Rohrwelle besteht kein zusätzlicher Raumbedarf. Wegen des einfachen Aufbaus kann der erfindungsgemäße Schwingungstilger billig hergestellt werden. Das elastische Koppelglied, das wie ein Gummiring ausgebildet ist, weist eine nur geringe Längenausdehnung auf. Somit kann der Schwingungstilger gezielt an dem jeweiligen Schwingungsmaximum (Schwingungsbauch) des Hohlrohres angeordnet werden.

Mit dem erfindungsgemäßen Schwingungsdämpfer werden Biegeschwingungen absorbiert. Da der Schwingungsdämpfer (Schwingungstilger) axialsymmetrisch aufgebaut ist und nur eine geringe Masse aufweist, ist seine Unwucht, auch im ausgelenkten Zustand, nur sehr gering. Die Gefahr des "Aufschaukelns" einer Unwucht ist deshalb kaum zu befürchten.
Der Schwingungstilger ist kompakt aufgebaut und - da er im Innern der Hohlwelle angeordnet ist - vor äußeren Einwirkungen zuverlässig geschützt.

Vorzugsweise ist der Schwingungstilger in einer geschlitzten Hülse vormontiert. Hierdurch wird die Montage erleichtert. Durch eine höhere Gummivorspannung kann mit einer geringeren Eigenspannung der Hülse gearbeitet werden. Die Hülse ist ein kostengünstiges Metallteil.

Zur Reduzierung der Temperaturbeanspruchung des Koppelgliedes bei nachfolgenden Bearbeitungsschritten (Schweißen, Härten, Lackieren) kann die Hülse wahlweise aus Material mit schlechter Wärmeleitung (z. B. Kunststoff) bestehen.

Das elastische Koppelglied besteht vorzugsweise aus Material der Elastomergruppe (oder einem technisch gleichwertigen Material).

Mit verschiedenen Härtegraden lassen sich die unterschiedlichsten Resonanzfrequenzen realisieren.
Durch geeignete Wahl der Vulkanisationsparameter kann die nachfolgende Erwärmung des Elastomers bei weiteren Produktionsschritten berücksichtigt werden (z. B. gezielte Untervulkanisation).

Der Tilger ist vorzugsweise so abgestimmt, daß die Eigenfrequenz 55% bis 85% der Eigenfrequenz der Welle beträgt. Hierdurch fällt die Amplitude der ersten der beiden sich neu ergebenden Resonanzstellen geringer aus als die Amplitude der zweiten Resonanzstelle.

Tilgermasse, Koppelelement und Einpreßhülse können wahlweise aneinander vulkanisiert, aneinander verpreßt und/oder aneinander verklebt sein.

Die Positionierung in der Hohlwelle wird durch die eingepreßte Hülse gesichert. Eine zweckentsprechende Profilierung der Einpreßhülse fixiert die Gummifeder und sichert die Tilgerposition.
Die Verwendung nur eines einzigen als Federring ausgebildeten Koppelelements ermöglicht ein definiertes, einfaches Eindrücken.

Eine axiale Bohrung oder ein Schlitz im Koppelelement ermöglicht einen Druckausgleich zwischen den Hohlräumen der rechten und linken Wellenhälfte und verhindert dadurch ungewollte Verspannungszustände, die sich durch die Gasentwicklung beim Anschweißen der Wellenenden ergeben können.

Zur Vermeidung von Taumelschwingungen hat sich als Verhältnis Breite der Gummifeder zur Länge der Tilgermasse 0,2 bis 0,4 als besonders geeignet herausgestellt.
Dabei weist die Tilgermasse üblicherweise 100 bis 200 Gramm auf (in Extremfällen auch 50 - 500 Gramm).

In Verbindung mit einer Elastomerdämpfung von 3 bis 15° ergibt sich eine Eigenfrequenz des Tilgers im Bereich von 70 bis 300 Hz.

Der erfindungsgemäße Tilger ist vorzugsweise ab einem Wellendurchmesser von ca 20 mm einsetzbar. Dabei sollte der Durchmeser der Tilgermasse mindestens 2 mm kleiner als der Rohrinnendurchmesser sein. Zur Vermeidung von Anschlaggeräuschen am Rohr kann eine Gummierung der Masse vorgesehen werden.
Eine Weiterbildung dieser Idee sieht vor, auf dem Umfang der Tilgermasse Anschlagnoppen anzuordnen.

Die erfindungsgemäß gedämpfte Hohlwelle kann vorzugsweise als in Fahrzeugquerrichtung eingebaute Antriebswelle von frontgetriebenen Fahrzeugen oder als in Fahrzeuglängsrichtung eingebaute Antriebswelle (als Hohlwelle ausgeführte Kardanwelle> von heckgetriebenen Fahrzeugen mit im Bug angebrachtem Motor verwendet werden.

Im folgenden wird der innerhalb einer Hohlwelle erfindungsgemäß ausgebildete Schwingungstilger anhand eines Ausführungsbeispiels näher beschrieben.

Die Fig 1 zeigt ausschnittsweise eine hohle Antriebswelle mit integriertem Schwingungstilger im Längsschnitt.
Die Figuren 2a und 2b zeigen Längs- und Querschnitt einer weiterführenden Abwandlung des erfindungsgemäßen Schwingungstilgers.

Der Schwingungsdämpfer (Schwingungstilger) 2 besteht aus einer Schwingungsdämpfermasse 4 und einem elastischen Koppelelement 6. Beide 4, 6 befinden sich innerhalb einer Hohlwelle (Rohrwelle) 8. Die Masse 4 steht über das Koppelelement 6 mit der Rohrwelle 8 in Wirkverbindung. Die Schwingungstilgermasse 4 ist in Bezug zur Rohrachse 10 ein rotationssymmetrisches Gebilde, welches in seiner Mitte eine Einschnürung (Taille) 12 zur Aufnahme des ringförmig ausgebildeten Koppelelements (Gummilagers) 6 aufweist. In dem dargestellten Ausführungsbeispiel befindet sich zwischen Gummilager 6 und Innenwand der Hohlwelle 8 eine Hülse 14. Vorzugsweise ist diese Hülse 14 geschlitzt, was eine leichtere Montage des Schwingungsdämpfers 2 und Druckausgleich ermöglicht.
Die Masse 4 des Schwingungstilgers 2 ist gänzlich von einer Gummihaut 16 umgeben.

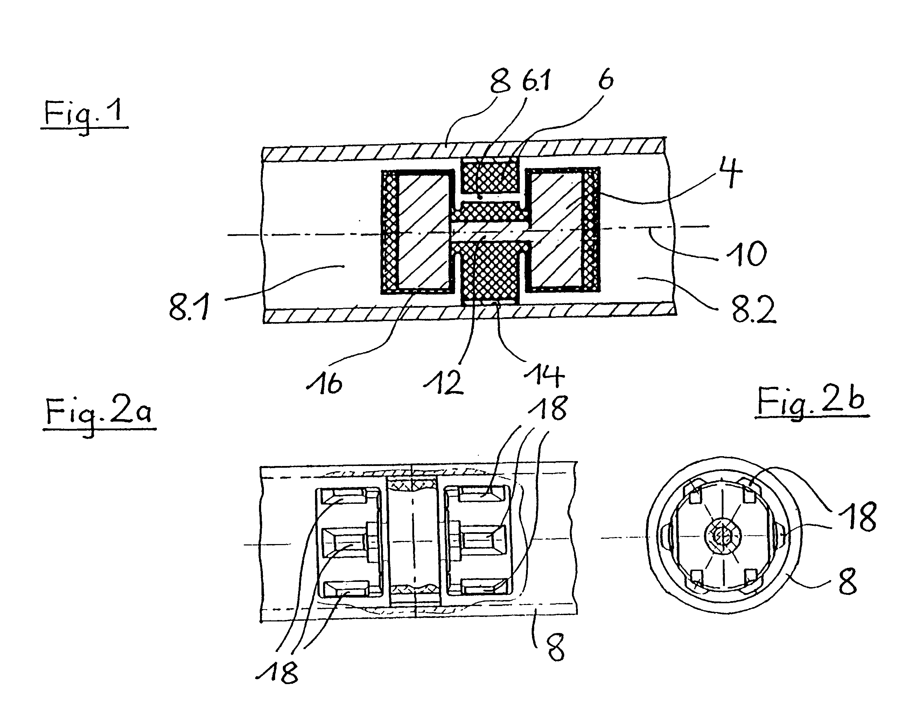

Bei der in den Figuren 2a und 2b gezeigten Weiterbildung des erfindungsgemäßen Schwingungstilgers 2 sind auf dem Umfang der Tilgermasse 4 Anschlagnoppen 18 angeordnet.

### Hohle Antriebswelle mit integriertem Schwingungstilger Bezugszeichenliste

- 2: Schwingungsdämpfer, Schwingungstilger
- 4: Schwingungsdämpfermasse, Tilgermasse
- 6: Koppelelement, Koppelglied, Gummilager, -ring
- 6.1: axiale Ausnehmung
- 8: Hohlwelle, Rohrwelle, (hohle) Antriebswelle
- 8.1, 8.2: Hohlräume innerhalb der Hohlwelle
- 10: Rohrachse
- 12: Einschnürung, Taille
- 14: (Einpreß-)Hülse
- 16: Gummihaut
- 18: Anschlagnoppen

## Patentansprüche

1. Hohle Antriebswelle (8) für ein Kraftfahrzeug,
mit innerhalb der Hohlwelle (8) angeordnetem Schwingungstilger (2),
der aus einer Dämpfermasse (4) und einem elastischen Koppelelement (6) besteht,
wobei die Dämpfermasse (4) rotationssymmetrisch und axialsymmetrisch ausgebildet ist und
über das elastische Koppelelement (6) mit der Innenwand der hohlen Antriebswelle (8) in Wirkverbindung steht,
**dadurch gekennzeichnet,**
**daß** die Dämpfermasse (4) mittig eine Einschnürung zur Aufnahme des elastischen Koppelelements (6) aufweist.

2. Antriebswelle nach Anspruch 1,
**dadurch gekennzeichnet,**
**daß** sich der Schwingungstilger (2) in einer Hülse (14) befindet,
die im eingebauten Zustand zwischen Koppelelement (6) und Innenwand der Hohlachse (8) angeordnet ist.

3. Antriebswelle nach Anspruch 2,
**dadurch gekennzeichnet,**
**daß** die Hülse (14) aus schlecht-wärmeleitendem Material besteht.

4. Antriebswelle nach einem der Ansprüche 1 bis 3,
**dadurch gekennzeichnet,**
**daß** das Koppelelement (6) aus elastomerem Werkstoff besteht.

5. Antriebswelle nach einem der Ansprüche 1 bis 4,
**gekennzeichnet durch**
Abstimmung der Eigenfrequenz des Schwingungstilgers <2) derart,
daß sie 55 bis 85% der Eigenfrequenz der Hohlwelle (8) ohne Schwingungstilger (2) beträgt.

6. Antriebswelle nach einem der Ansprüche 1 bis 5,
**dadurch gekennzeichnet,**
**daß** Dämpfermasse (4), Koppelelement (6) und Binpreßhülse (14) aneinander vulkanisiert oder aneinander verpreßt und/oder aneinander verklebt sind.

7. Antriebswelle nach einem der Ansprüche 1 bis 6,
**dadurch gekennzeichnet,**
**daß** der Schwingungstilger (2) von einer Gummihaut (16) umgeben und die Dämpfermasse (4) im Umfangsbereich mit radialen Anschlagsnoppen (18) versehen ist.

8. Antriebswelle nach einem der Ansprüche 1 bis 7,
**dadurch gekennzeichnet,**
**daß** das Koppelelement (6) mit einer die Hohlräume (8.1) und (8.2) beiderseits des Schwingungstilgers (2) miteinander verbindenden axialen Ausnehmung (6.1) versehen ist.

9. Verwendung einer Antriebswelle entsprechend einem der vorhergehenden Ansprüche 1 bis 8 zur Verminderung von Biegeschwingungen als in Fahrzeugquerrichtung eingebaute Antriebswelle (8).

10. Verwendung einer Antriebswelle entsprechend einem der Ansprüche 1 bis 8 zur Verminderung von Biegeschwingungen als in Fahrzeuglängsrichtung eingebaute Antriebswelle (8).

## Claims

1. Hollow drive shaft (8) for an automotive vehicle, having a vibration absorber (2) which is disposed internally of the hollow shaft (8) and comprises a damping mass (4) and a resilient coupling element (6), the damping mass (4) being rotationally symmetrical and axially symmetrical and being in operative connection with the internal wall of the hollow drive shaft (8) via the resilient coupling element (6), **characterised in that** the damping mass (4) has, centrally, a constriction to accommodate the resilient coupling element (6).

2. Drive shaft according to claim 1, **characterised in that** the vibration absorber (2) is situated in a sleeve (14), which is disposed between the coupling element (6) and the internal wall of the hollow shaft (8) in its installed position.

3. Drive shaft according to claim 2, **characterised in that** the sleeve (14) is formed from material which is a poor conductor of heat.

4. Drive shaft according to one of claims 1 to 3, **characterised in that** the coupling element (6) is formed from elastomeric material.

5. Drive shaft according to one of claims 1 to 4, **characterised by** adapting the inherent frequency of the vibration absorber (2) in such a manner that said frequency amounts to between 55 % and 85 % of the inherent frequency of the hollow shaft (8) without vibration absorber (2).

6. Drive shaft according to one of claims 1 to 5, **characterised in that** damping mass (4), coupling element (6) and press-in sleeve (14) are vulcanised onto one another or pressed against one another and/or glued to one another.

7. Drive shaft according to one of claims 1 to 6, **characterised in that** the vibration absorber (2) is surrounded by a rubber skin (16), and the damping mass (4) is provided with radial stop knubs (18) in the circumferential region.

8. Drive shaft according to one of claims 1 to 7, **characterised in that** the coupling element (6) is provided with an axial recess (6.1), which interconnects the hollow cavities (8.1) and (8.2) on both sides of the vibration absorber (2).

9. Use of a drive shaft according to one of the preceding claims 1 to 8, for reducing bending vibrations, as a drive shaft (8) installed in the transverse direction of the vehicle.

10. Use of a drive shaft according to one of claims 1 to 8, for reducing bending vibrations, as a drive shaft (8) installed in the longitudinal direction of the vehicle.

## Revendications

1. Arbre moteur creux (8) pour un véhicule à moteur, avec amortisseur de vibrations (2), disposé à l'intérieur de l'arbre creux (8),
qui est constitué d'une masse d'amortissement (4) et d'un élément de couplage élastique (6),
dans lequel la masse d'amortissement (4) est conçue avec symétrie de rotation et symétrie axiale et
est en liaison active avec la paroi intérieure de l'arbre moteur creux (8) par l'intermédiaire de l'élément de couplage élastique (6),
**caractérisé par le fait**
**que** la masse d'amortissement (4) présente dans l'axe une striction pour recevoir l'élément de couplage élastique (6).

2. Arbre moteur selon la revendication 1,
**caractérisé par le fait**
**que** l'amortisseur de vibration (2) se trouve dans une douille (14),
qui, à l'état monté, est disposée entre élément de couplage (6) et paroi intérieure de l'arbre creux (8).

3. Arbre moteur selon la revendication 2,
**caractérisé par le fait**
**que** la douille (14) est constituée d'un matériau mauvais conducteur de la chaleur.

4. Arbre moteur selon l'une des revendications 1 à 3,
**caractérisé par le fait**
**que** l'élément de couplage (6) est constitué d'un matériau élastomère.

5. Arbre moteur selon l'une des revendications 1 à 4,
**caractérisé par** un accord de la fréquence propre de l'amortisseur de vibrations (2) de façon
qu'elle vaille 55 à 85% de la fréquence propre de l'arbre creux (8) en l'absence de l'amortisseur de vibrations (2).

6. Arbre moteur selon l'une des revendications 1 à 5,
**caractérisé par le fait**
**que** masse d'amortissement (4), élément de couplage (6) et douille de pressage (14) sont vulcanisés l'un contre l'autre ou ajustés l'un contre l'autre à ajustement serré et/ou collés l'un contre l'autre.

7. Arbre moteur selon l'une des revendications 1 à 6,
**caractérisé par le fait**
**que** l'amortisseur de vibrations (2) est entouré par une peau de caoutchouc (16) et que la masse d'amortissement (4) présente dans la zone périphérique des bossages de butée radiaux (18).

8. Arbre moteur selon l'une des revendications 1 à 7,
**caractérisé par le fait**
**que** l'élément de couplage (6) présente un évidemment axial (6.1) qui réunit l'un à l'autre les espaces creux (8.1) et (8.2) des deux côtés de l'amortisseur de vibrations (2).

9. Emploi d'un arbre moteur correspondant à l'une des revendications précédentes 1 à 8 pour réduire. les vibrations de torsion comme dans un arbre moteur (8) monté selon la direction transversale d'un véhicule.

10. Emploi d'un arbre d'entraînement correspondant à l'une des revendications 1 à 8 pour réduire les vibrations de torsion comme dans un arbre d'entraînement (8) monté selon la direction longitudinale d'un véhicule.
